Europäisches Patentamt

European Patent Office

Office européen des brevets

(19)

(11) **EP 1 159 673 B1**

(12) **FASCICULE DE BREVET EUROPEEN**

(45) Date de publication et mention
de la délivrance du brevet:
**19.11.2003 Bulletin 2003/47**

(21) Numéro de dépôt: **00988887.6**

(22) Date de dépôt: **07.12.2000**

(51) Int Cl.$^7$: **G06F 7/58**

(86) Numéro de dépôt international:
**PCT/FR00/03422**

(87) Numéro de publication internationale:
**WO 01/046797 (28.06.2001 Gazette 2001/26)**

(54) **GENERATEUR DE NOMBRES ALEATOIRES HAUT DEBIT**

SCHNELLER ZUFALLSZAHLENGENERATOR

HIGH RATE RANDOM NUMBER GENERATOR

(84) Etats contractants désignés:
**AT BE CH CY DE DK ES FI FR GB GR IE IT LI LU
MC NL PT SE TR**

(30) Priorité: **21.12.1999 FR 9916123**

(43) Date de publication de la demande:
**05.12.2001 Bulletin 2001/49**

(73) Titulaire: **BULL S.A.
78430 Louveciennes (FR)**

(72) Inventeur: **LE QUERE, Patrick
F-91140 Villebon sur Yvette (FR)**

(74) Mandataire: **Denis, Hervé
BULL S.A.
Département de la Propriété Intellectuelle
PC: P4/079
rue Jean Jaurès - BP 68
78340 Les Clayes-sous-Bois (FR)**

(56) Documents cités:
**WO-A-99/61978         US-A- 4 641 102**

• **"INTEGRATED CIRCUIT COMPATIBLE RANDOM
NUMBER GENERATOR" IBM TECHNICAL
DISCLOSURE BULLETIN,US,IBM CORP. NEW
YORK, vol. 30, no. 11, 1 avril 1988 (1988-04-01),
pages 333-335, XP000021682 ISSN: 0018-8689**
• **PETRIE C S ET AL: "MODELING AND
SIMULATION OF OSCILLATOR-BASED
RANDOM NUMBER GENERATORS" IEEE
INTERNATIONAL SYMPOSIUM ON CIRCUITS
AND SYSTEMS (ISCAS),US,NEW YORK, IEEE, 12
mai 1996 (1996-05-12), pages 324-327,
XP000704602 ISBN: 0-7803-3074-9**

**Description**

La présente invention se situe dans le domaine du chiffrement et concerne plus particulièrement une solution matérielle (hardware) pour l'implémentation d'un générateur de nombres aléatoires destiné notamment à la génération de clés de chiffrement.

Le besoin accru de performance en cryptographie associé à celui d'inviolabilité conduit les fournisseurs de systèmes de sécurité à privilégier des solutions matérielles de plus en plus performante en terme de débit et de qualité d'aléas.

Le générateur selon l'invention, appelé également générateur aléatoire, peut être associé à une carte additionnelle PCI, abréviations anglo-saxonnes pour "Peripheral Component Interconnect" permettant d'accélérer les fonctions cryptographiques d'une machine : serveur ou station.

Une telle carte couplée à un serveur constituera l'élément matériel de sécurité de la machine.

Il existe deux types de générateurs de nombres aléatoires utilisés en électronique.

Le premier type de générateur est basé sur un phénomène physique aléatoire tel que le bruit thermique dans une diode, une émission radioactive, etc. Il est appelé "générateur physique" dans la suite de la description.

Le deuxième type de générateur est basé sur un algorithme alimenté par un "germe", défini ultérieurement, qui fournit en sortie une série de nombres aléatoires avec une période plus ou moins grande. Il est appelé "générateur pseudo-aléatoire" dans la suite de la description.

Une longue période associée à un germe de bonne qualité, en terme de qualité d'aléas, fournit en sortie d'un tel générateur, une série de nombres quasiment imprédictibies.

Les générateurs physiques sont bien sûr les seules sources réelles de nombres aléatoires puisque complètement imprédictibles mais nombre d'entre eux ne sont pas exempt de corrélations au niveau de leur sortie.

D'autre part, leur débit est en général assez faible de l'ordre de quelques dizaines de kilobits par seconde.

Les générateurs pseudo-aléatoires quant à eux sont simples à implémenter sous forme logicielle et permettent de fournir un débit important de nombres aléatoires de l'ordre de quelques dizaines de mégabits par seconde.

Cependant, ce type de générateurs répond à un processus déterministe et est donc prédictible.

La qualité d'un générateur aléatoire est difficile à estimer car il n'existe pas de procédure officielle et normalisée permettant de vérifier le caractère plus ou moins aléatoire d'une suite de nombres.

On trouve cependant deux séries de tests permettant de "valider" un tel générateur.

La première série de tests, appelée tests FIPS140, est décrite dans le document FIPS140-1 intitulé "Security requirements for cryptographic modules" émis par l'organisme américain NIST. Ces tests constituent le minimum exigé pour tout composant de sécurité désireux de revendiquer le label "FIPS140 compliant", un des objectifs de la présente invention.

La deuxième série de tests, mise au point par Georges Marsaglia et appelée tests DIEHARD, sont beaucoup plus exigeants que les tests FIPS et confèrent, au générateur qui les passe tous avec succès, un certain niveau de qualité reconnu.

Ces deux séries de tests sont jointes en annexe de la présente description.

L'invention a notamment pour but de pallier les inconvénients précités et permet de s'affranchir de circuit physique spécifique telle qu'une diode de bruit, tout en répondant au double impératif de débit élevé, supérieur à 100 Mbits/s, et de très bonne qualité des aléas fournis ; qualité mesurée par le fait que le générateur doit passer avec succès les séries de tests FIPS140 et DIEHARD cités ci-dessus.

A Un générateur de nombres aléatoires comprenant un premier générateur physique basé sur un phénomène électronique aléatoire fournissant un germe alimentant un 2ième générateur pseudo aléatoire est connu dans le document WO-A-99/61978 et dans l'article intitulé 'Integrated Circuit Compatible Random Number Generator' publié dans le IBM Technical Disclosure Bulletin, vol. 30, No. 11, 1 avril 1988 (1988-04-01), pages 333-335, XP000021682 ISSN: 0018-8689. Les 2 documents correspondent plus ou moins au préambule de la revendication 1. Néanmoins, dans le premier document, la sortie du générateur est celle du générateur physique, le germe étant fournit au générateur pseudo-aléatoire pour Contrôler la fréquence d'échantillonnage de plusieurs "Ring oscillators". Dans le second document, le germe est utilisé comme valeur de départ pour le générateur pseudo aléatoire.

Un aspect de l'invention est donc un générateur de nombre aléatoire tel que défini dans la revendication 1.

L'invention a pour deuxième objet, un mécanisme de génération de nombres aléatoires à la demande, caractérisé en ce qu'il comporte un générateur de nombres aléatoires tel que défini ci-dessus, une mémoire double-port comportant un buffer de réception, couplée en sortie du générateur sur le bus du générateur, et en ce qu'il comporte un microprocesseur, couplé à la mémoire double-port par le bus microprocesseur, communiquant avec le générateur à travers la mémoire double-port et postant dans la mémoire double-port un mot de commande comprenant une adresse et un compte contenant un nombre maximal de mots aléatoires à stocker, et en ce que le buffer de la mémoire double-port, à la demande du microprocesseur, est alimentée par la mémoire interne du générateur jusqu'à épuisement d'un compte correspondant à un nombre maximal déterminé de nombres aléatoires, puis exploité par le microprocesseur.

Enfin, l'invention a pour troisième objet, une carte accélératrice des fonctions cryptographiques d'une machine informatique, caractérisée en ce qu'elle supporte un générateur de nombres aléatoires ou un mécanisme tels que définis ci-dessus.

L'invention a pour avantage de n'utiliser que des circuits électroniques standard pour la réalisation d'un générateur "physique", et donc de réduire la complexité et le coût d'un tel générateur.

D'autres avantages et caractéristiques de la présente invention apparaîtront à la lecture de la description qui suit faite en référence aux figures annexées qui représentent :

- la figure 1, le principe général d'un mécanisme de génération de nombres aléatoires à la demande, dans lequel s'insère un générateur aléatoire selon l'invention ;
- la figure 2, le schéma bloc d'un générateur aléatoire selon l'invention ;
- la figure 3, une bascule recevant respectivement sur ses entrées, les signaux d'horloge générés par deux oscillateurs de fréquences différentes, et servant à illustrer le phénomène de métastabilité ;
- les figures 4a et 4b, les chronogrammes respectivement des signaux injectés sur les entrées de la bascule de la figure 3 ;
- la figure 4c, le chronogramme du signal de sortie de la bascule ; et
- la figure 5, le schéma bloc d'un générateur physique selon l'invention.

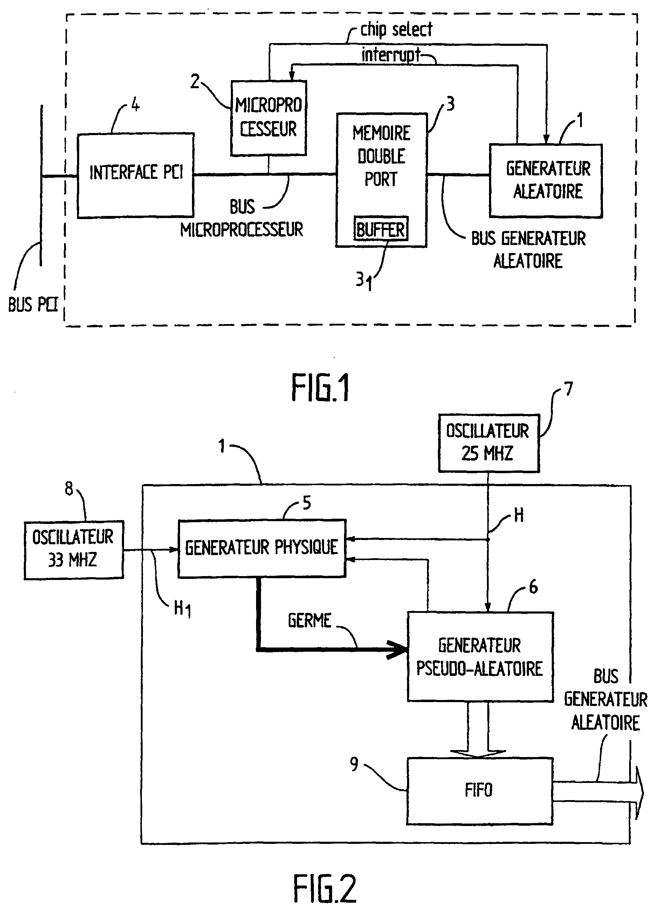

Le principe général d'un mécanisme de génération de nombres aléatoires dans lequel s'insère le générateur selon l'invention est illustré à la figure 1.

Sur cette figure, les liaisons sans flèche sont bidirectionnelles.

Le mécanisme est délimité sur la figure par une ligne fermée discontinue qui peut également délimiter une carte PCI, citée précédemment, supportant le mécanisme.

Le générateur aléatoire 1 est réalisé à partir d'un automate en logique programmable, implémenté dans un composant électronique programmable FPGA, abréviations anglo-saxonnes pour "Field Programmable Gate Array", et qui sous contrôle d'un microprocesseur 2 délivre à la demande de celui-ci des nombres aléatoires avec un débit élevé (D> 100 Mbits/s).

Ces nombres aléatoires sont utilisés par différents algorithmes et plus particulièrement par les algorithmes de chiffrement pour la génération de clés de chiffrement.

Une mémoire double-port 3, de type DMA, abréviations anglo-saxonnes pour "Direct Memory Acces" est couplée en sortie du générateur aléatoire 1 via le bus du générateur.

Le microprocesseur 2 est couplé à la mémoire double-port 3 via le bus microprocesseur.

Il communique avec le générateur 1 à travers la mémoire double-port 3 qui permet l'échange des données et des commandes/statuts entre le générateur aléatoire 1 et le bus PCI de la machine à laquelle la carte est connectée, via une interface PCI 4.

Le microprocesseur 2 poste dans la mémoire double-port 3 un mot de commande comprenant uniquement une adresse et un compte.

L'adresse pointe vers un buffer de réception $3_1$ de la mémoire double-port 3, dans lequel le générateur 1 stocke les mots aléatoires.

Le compte, quant à lui, fixe le nombre de mots aléatoires demandés au générateur 1 avec une capacité maximum, par exemple de 32 Kbytes.

Le microprocesseur 2 envoie alors une commande d'activation de type "chip select" au générateur 1 qui lit le mot de commande dans la mémoire double-port 3 et exécute celui-ci.

Les mots générés sont ensuite stockés dans le buffer de réception $3_1$, indiqué par le microprocesseur 2, jusqu'à l'épuisement de la capacité maximum du compte.

L'automate du générateur aléatoire 1 envoie alors une commande d'interruption "interrupt" au microprocesseur 2 lui indiquant que le buffer $3_1$ contenant les résultats est disponible en lecture.

Le schéma bloc d'un générateur aléatoire selon l'invention est illustré à la figure 2.

Il comporte principalement deux étages 5 et 6.

Le première étage 5 comporte un générateur "physique" et le deuxième étage 6, couplé au premier, comporte un générateur "pseudo-aléatoire".

Le générateur "physique" est un générateur de nombre aléatoires basé sur les phénomènes physiques de métastabilité et de bruit de phase d'oscillateurs de fréquences différentes.

Le générateur physique 5 fournit au générateur pseudo-aléatoire 6 un germe aléatoire de bonne qualité en ce sens qu'il satisfait aux tests FIPS140 et possède par ailleurs un débit de l'ordre de 10 Kbits/s.

Le générateur "pseudo-aléatoire" 6, à partir du germe reçu du générateur physique 5, implémente un algorithme de type multiplication avec retenue possédant d'une part un très bon débit car implémenté directement en hardware, et satisfaisant d'autre part aux deux séries de test introduits ci-dessus et détaillés en annexe.

Dans le mode de réalisation décrit, les deux générateurs 5 et 6 fonctionnent au rythme d'une horloge externe 7 générant un premier signal d'horloge "haute fréquence" H de fréquence égale à 25 MHz.

Un oscillateur 8 délivre un deuxième signal "haute fréquence" H1 de fréquence égale à 33 MHZ et constitue le signal d'entrée du générateur physique 5.

Une mémoire interne 9 de type FIFO, abréviations anglo-saxonnes pour "First Input First Output", est couplée en sortie du générateur pseudo-aléatoire 6

La mémoire FIFO 9 sert donc à stocker les nombres aléatoires résultant du traitement opéré par les deux générateurs 5 et 6 en attendant que le microprocesseur 2 demande leur transfert vers la mémoire double-port 3.

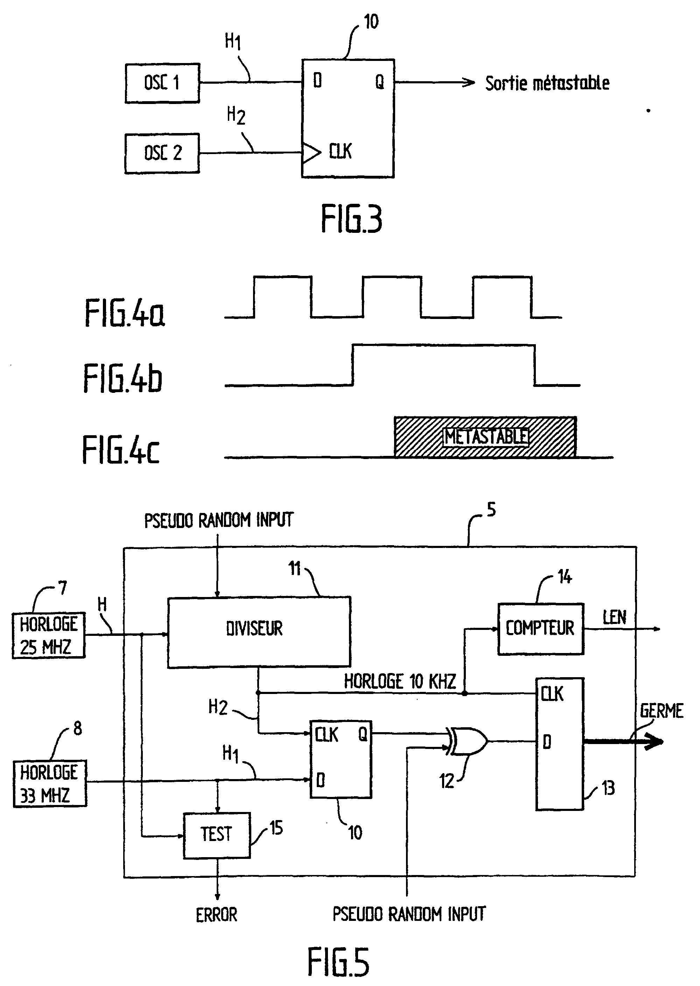

Le générateur physique selon l'invention exploite le phénomène dit de métastabilité dont le principe est expliqué en détail ci-après en référence aux figures 3 et 4a à 4c.

Lorsque deux oscillateurs OSC1 et OSC2, de fréquence différente, travaillent en asynchronisme l'un de l'autre, ils génèrent chacun un signal d'horloge distinct et les signaux synchronisés à partir de ces signaux d'horloge appartiennent à des domaines d'horloge distincts qui sont en principe indépendants du point de vue fonctionnel. Il arrive néanmoins un moment où des signaux sont échangés entre les deux domaines. Cette situation est un handicap dans tout design où elle se rencontre car elle conduit au phénomène de métastabilité.

Les signaux issus de domaines d'horloge différents ne respectent pas les temps d'établissement, ou "set-up" en terminologie anglo-saxonne, des éléments mémoires (bascules ou registres) de l'autre domaine conduisant les sorties de ces éléments à prendre des valeurs aléatoires.

On a représenté à la figure 3 une bascule recevant respectivement sur son entrée D et sur son entrée d'horloge, les signaux d'horloge H1 et H2 générés respectivement par les oscillateurs OSC1 et OSC2.

Les figures 4a et 4b illustrent respectivement des exemples de chronogrammes correspondant aux deux signaux d'horloge. la figure 4c illustre un chronogramme correspondant au signal de sortie Q de la bascule.

La sortie d'une bascule dont le "set-up" a été violé reste dans un état intermédiaire entre l'état "0" et l'état "1" qui est qualifié de métastable avant de se stabiliser dans l'état définitif "0" ou "1".

On règle en général ce problème en mettant deux bascules en série l'une dernière l'autre pour éviter la propagation de cet aléa indésirable.

A l'inverse, cette métastabilité est exploitée par la présente invention et son occurrence est accentuée par l'utilisation de deux oscillateurs de fréquence très différentes.

On choisit ainsi de préférence un signal "haute fréquence" H1 et un signal "basse fréquence" H2.

Le signal "haute fréquence" H1 est échantillonné par le signal " basse fréquence" H2.

Le phénomène recherché est ainsi accentué par deux phénomène physiques :

- le bruit de phase généré par l'oscillateur "haute fréquence"; et
- la variabilité forcée de la période de l'oscillateur "basse fréquence" provoquée par l'utilisation d'une partie des bits de sortie du générateur pseudo-aléatoire dans le compteur diviseur servant à générer cette fréquence. On obtient ainsi un facteur de forme variable.

La figure 5 illustre le schéma bloc d'un générateur physique 5 selon l'invention dans lequel on retrouve la bascule 10 décrite en référence à la figue 3 pour l'explication de la métastabilité.

Le module d'entrée du générateur physique 5 est un compteur 11 diviseur par 1312.

Il est alimenté par un signal d'horloge externe H, de fréquence égale à 25 MHz, et génère en sortie un signal d'horloge "basse fréquence" H2 qui échantillonne le signal d'horloge "haute fréquence" H1 d'entrée du générateur 5, de fréquence égale à 33 MHz.

Le signal d'horloge H2 est injecté à l'entrée d'horloge CLK de la bascule 10, et le signal H1 est injecté sur l'entrée D de la bascule 10.

Le signal de sortie, obtenu en sortie Q de la bascule 10, est combinée à travers un circuit logique "ou exclusif" 12 avec un bit de sortie du générateur pseudo-aléatoire 6 et envoyé vers l'entrée D d'un registre à décalage 64 bits référencé 13.

Le circuit logique 12 permet ainsi de pallier à une éventuelle défaillance du générateur physique 5.

Le registre à décalage 13 remet en forme le signal issu de la bascule 10.

Dans le mode de réalisation décrit, il génère deux mots aléatoires de 32 bits tous les 32 x 100 µs soit 3,2 ms environ.

Ces deux mots constituent le "germe" utilisé par générateur pseudo-aléatoire 6 décrit ci-après.

Pour répondre notamment aux contraintes de la série de tests DIEHARD, le renouvellement du germe se fait typiquement tous les 100 millions de bits.

Ainsi, un compteur par 3750, 14, génère un signal LEN (Load Enable) qui charge effectivement un nouveau germe dans le générateur pseudo-aléatoire 6 toutes les 375 ms environ.

Le générateur physique 5 comporte en outre un module de test 15 comprenant deux compteurs et un comparateur, non représentés.

Les deux compteurs reçoivent respectivement en entrée les deux signaux d'horloges H et H1, respectivement de 25 MHz et de 33 MHz, et leurs sorties alimentent le comparateur, et génère un signal d'erreur en cas de dysfonctionnement (blocage) de l'horloge à 33 MHz dont le signal est utilisé comme signal externe "haute fréquence" H1.

Ce test permet de vérifier en permanence que la valeur du signal servant à générer le germe aléatoire n'est pas bloqué à "0" ou à "1 ".

En cas de blocage, le signal d'erreur invalide la sortie finale du générateur physique 5 en forçant l'écriture de zéros dans la mémoire interne 9.

Le générateur pseudo-aléatoire 6 est du type multiplication avec retenue.

Il convient particulièrement à l'implémentation d'un générateur selon l'invention du fait de la rapidité d'exécution de son algorithme mais n'est cependant pas le seul pouvant être utilisé par le générateur pseudo-aléatoire.

L'algorithme s'exprime de la façon suivante :

$$X := (A * X(15 : 0)) + X(31 : 16) ;$$

$$Y := (B * Y(15 : 0)) + Y(31 : 16) ;$$

$$PRN(31 : 16) <= X(15 : 0) ;$$

$$PRN(15 : 0) <= Y(15 : 0) ;$$

où :

X et Y sont des variables de 32 bits initialisées avec le germe décrit précédemment, A et B sont des constantes de 16 bits et PRN correspond à un mot de 32 bits délivré en sortie du générateur pseudo-aléatoire 6.
Le mot PRN est envoyé vers la mémoire interne 9 du générateur aléatoire **1** à raison d'un mot de 32 bits toutes les 120 ns soit un débit global de 266 Mbits/s.

La sortie de la mémoire interne 9 couplée à la mémoire double-port 3 alimente le buffer de réception de la mémoire double port 3.

La lecture de la mémoire interne 9 s'effectue à la cadence d'un mot de 32 bits toutes les 30 ns ceci afin de ne pas ralentir le débit interne du générateur aléatoire 1 et ce, même en cas de conflit d'accès à la mémoire double port 3.

En conclusion, la présente invention répond à deux objectifs.

Le premier objectif est de réaliser une implémentation matérielle compacte d'un générateur de nombres aléatoires entièrement réalisé à partir de composants standards n'utilisant pas de composants spécifiques générateur de bruit, et pouvant d'autre part être supportée par une carte PCI accélératrice des ressources cryptographiques d'une machine informatique.

Le deuxième objectif cumulé au premier est de pouvoir répondre aux contraintes de débit et d'aléas recherchées. Dans ce contexte, un générateur "physique" de nombres aléatoires ne se suffit pas à lui-même.

C'est pourquoi la présente invention associe un générateur physique exploitant le phénomène de métastabilité associé à celui du bruit de phase pour garantir un germe de bonne qualité d'aléas, avec un générateur pseudo-aléatoire qui accélère le débit des germes délivrés par le générateur physique et qui, par ailleurs, gomme les éventuelles corrélations en sortie du générateur physique qui n'est pas parfait.

## ANNEXES

Ci-joint une description sommaire des tests FIPS140 et DIEHARD passés avec succès par le générateur aléatoire selon l'invention.

### 1 ) Les tests FIPS 140 :

Les tests FIPS 140 s'effectuent sur une séquence de 20000 bits et comprennent :

→ un test Monobit : le nombre de bits à "1" doit être tel que : 9654< N <10346

→ un test dit POKER : test qui divise le flux de 20000 bits en 5000 suites contiguës de 4 bits. Pour chaque suite une fonction f(i) est évaluée qui est égale au nombre de fois ou la valeur 0<i<15 est apparue.

La fonction suivante est alors évaluée :

$$X = (16/5000) * (\text{SOMME } (f(i) * f(i))) - 5000 \text{ avec } 0<i<15$$

Le test est positif si $1.03 < X < 57.4$

→ Les Runs tests qui comptabilisent le nombre d'occurrences des suites 11 111 1111 00 000 0000 ...

Le test est positif si pour chaque longueur de run le nombre de résultats est compris dans l'intervalle correspondant

| Longueur des runs | Intervalle requis |
|---|---|
| 1 | 2267-2733 |
| 2 | 1079-1421 |
| 3 | 502-748 |
| 4 | 223-402 |
| 5 | 90-223 |
| >6 | 90-223 |

→ Le Long Run Test : qui vérifie l'absence de séquence de 34 "1" ou 34 "0" dans la suite de 20000 bits

Pour plus de détail: voir FIPS PUB 140-1 : SECURITY REQUIREMENTS FOR CRYPTOGRAPHIC MODULE

1) Les tests DIEHARD

Ces tests sont au nombre de 15 et sont tous décrits dans cette annexe. Un fichier contenant 80 Mbits aléatoires est requis pour passer les tests et les résultats sont donnés sous forme de nombres $0<p<1$.
Le résultat des tests dépend du nombre de valeurs p= 1 ou p=0 trouvées :

→ Aucune valeur p=1 ou p=0 ➔ le résultat des tests est positif.
→ Quelques valeurs p=1 ou p=0 ➔ le résultat des tests est positif mais l'aléas est de qualité moyenne
→ Le nombre de valeurs p=1 ou p=0 consécutives est > 5 dans un ou plusieurs tests ➔ le résultat des tests est négatif.

```
:::::::::::::::::::::::::::::::::::::::::::::::::::::::::::::::::::
::::::::::::::::::::::::::::::::::::::::::::::::::::::::::::::::::::
::        This is the BIRTHDAY SPACINGS TEST           ::
:: Choose m birthdays in a year of n days.  List the spacings   ::
:: between the birthdays.  If j is the number of values that    ::
:: occur more than once in that list, then j is asymptotically  ::
:: Poisson distributed with mean m^3/(4n).  Experience shows n  ::
:: must be quite large, say n>=2^18, for comparing the results  ::
:: to the Poisson distribution with that mean.  This test uses  ::
:: n=2^24 and m=2^9,  so that the underlying distribution for j ::
:: is taken to be Poisson with lambda=2^27/(2^26)=2.  A sample  ::
:: of 500 j's is taken, and a chi-square goodness of fit test   ::
:: provides a p value.  The first test uses bits 1-24 (counting ::
:: from the left) from integers in the specified file.          ::
::   Then the file is closed and reopened. Next, bits 2-25 are  ::
:: used to provide birthdays, then 3-26 and so on to bits 9-32. ::
:: Each set of bits provides a p-value, and the nine p-values   ::
:: provide a sample for a KSTEST.                               ::
::::::::::::::::::::::::::::::::::::::::::::::::::::::::::::::::::::
::::::::::::::::::::::::::::::::::::::::::::::::::::::::::::::::::::
```

::          THE OVERLAPPING 5-PERMUTATION TEST          ::

:: This is the OPERM5 test. It looks at a sequence of one mill- ::

:: ion 32-bit random integers. Each set of five consecutive     ::

:: integers can be in one of 120 states, for the 5! possible or- ::

:: derings of five numbers. Thus the 5th, 6th, 7th,...numbers    ::

:: each provide a state. As many thousands of state transitions  ::

:: are observed, cumulative counts are made of the number of    ::

:: occurences of each state. Then the quadratic form in the     ::

:: weak inverse of the 120x120 covariance matrix yields a test  ::

:: equivalent to the likelihood ratio test that the 120 cell    ::

:: counts came from the specified (asymptotically) normal dis-  ::

:: tribution with the specified 120x120 covariance matrix (with ::

:: rank 99). This version uses 1,000,000 integers, twice.       ::

:::::::::::::::::::::::::::::::::::::::::::::::::::::::::::::::::::::::

:::::::::::::::::::::::::::::::::::::::::::::::::::::::::::::::::::::::

:: This is the BINARY RANK TEST for 31x31 matrices. The leftmost ::

:: 31 bits of 31 random integers from the test sequence are used ::

:: to form a 31x31 binary matrix over the field {0,1}. The rank  ::

:: is determined. That rank can be from 0 to 31, but ranks< 28   ::

:: are rare, and their counts are pooled with those for rank 28. ::

:: Ranks are found for 40,000 such random matrices and a chisqua-::

:: re test is performed on counts for ranks 31,30,29 and <=28.   ::

:::::::::::::::::::::::::::::::::::::::::::::::::::::::::::::::::::::::

:::::::::::::::::::::::::::::::::::::::::::::::::::::::::::::::::::::::

:: This is the BINARY RANK TEST for 32x32 matrices. A random 32x ::

:: 32 binary matrix is formed, each row a 32-bit random integer. ::

:: The rank is determined. That rank can be from 0 to 32, ranks  ::

:: less than 29 are rare, and their counts are pooled with those ::

:: for rank 29. Ranks are found for 40,000 such random matrices  ::

:: and a chisquare test is performed on counts for ranks 32,31,  ::

:: 30 and <=29.                                           ::

```
:::::::::::::::::::::::::::::::::::::::::::::::::::
:::::::::::::::::::::::::::::::::::::::::::::::::::
```

:: This is the BINARY RANK TEST for 6x8 matrices.  From each of ::
:: six random 32-bit integers from the generator under test, a  ::
:: specified byte is chosen, and the resulting six bytes form a  ::
:: 6x8 binary matrix whose rank is determined.  That rank can be ::
:: from 0 to 6, but ranks 0,1,2,3 are rare; their counts are     ::
:: pooled with those for rank 4. Ranks are found for 100,000     ::
:: random matrices, and a chi-square test is performed on        ::
:: counts for ranks 6,5 and <=4.                                 ::

```
:::::::::::::::::::::::::::::::::::::::::::::::::::::
:::::::::::::::::::::::::::::::::::::::::::::::::::::
```

::                   THE BITSTREAM TEST                 ::
:: The file under test is viewed as a stream of bits. Call them ::
:: b1,b2,... . Consider an alphabet with two "letters", 0 and 1 ::
:: and think of the stream of bits as a succession of 20-letter ::
:: "words", overlapping.  Thus the first word is b1b2...b20, the ::
:: second is b2b3...b21, and so on.  The bitstream test counts   ::
:: the number of missing 20-letter (20-bit) words in a string of ::
:: $2^{21}$ overlapping 20-letter words.  There are $2^{20}$ possible 20 ::
:: letter words.  For a truly random string of $2^{21}+19$ bits, the ::
:: number of missing words j should be (very close to) normally ::
:: distributed with mean 141,909 and sigma 428.  Thus           ::
:: (j-141909)/428 should be a standard normal variate (z score) ::
:: that leads to a uniform [0,1) p value.  The test is repeated  ::
:: twenty times.                                                 ::

```
:::::::::::::::::::::::::::::::::::::::::::::::::::::::
:::::::::::::::::::::::::::::::::::::::::::::::::::::::
```

::           The tests OPSO, OQSO and DNA                ::
::           OPSO means Overlapping-Pairs-Sparse-Occupancy       ::
:: The OPSO test considers 2-letter words from an alphabet of    ::

:: 1024 letters.  Each letter is determined by a specified ten  ::

:: bits from a 32-bit integer in the sequence to be tested. OPSO ::

:: generates  2^21 (overlapping) 2-letter words  (from 2^21+1  ::

:: "keystrokes")  and counts the number of missing words---that  ::

:: is 2-letter words which do not appear in the entire sequence. ::

:: That count should be very close to normally distributed with  ::

:: mean 141,909, sigma 290. Thus (missingwrds-141909)/290 should ::

:: be a standard normal variable. The OPSO test takes 32 bits at ::

:: a time from the test file and uses a designated set of ten  ::

:: consecutive bits. It then restarts the file for the next de-  ::

:: signated 10 bits, and so on.                        ::

::                                                      ::

::    OQSO means Overlapping-Quadruples-Sparse-Occupancy      ::

::   The test OQSO is similar, except that it considers 4-letter ::

:: words from an alphabet of 32 letters, each letter determined  ::

:: by a designated string of 5 consecutive bits from the test  ::

:: file, elements of which are assumed 32-bit random integers.  ::

:: The mean number of missing words in a sequence of 2^21 four-  ::

:: letter words, (2^21+3 "keystrokes"), is again 141909, with  ::

:: sigma = 295.  The mean is based on theory; sigma comes from  ::

:: extensive simulation.                              ::

::                                                      ::

::    The DNA test considers an alphabet of 4 letters::  C,G,A,T,::

:: determined by two designated bits in the sequence of random  ::

:: integers being tested.  It considers 10-letter words, so that ::

:: as in OPSO and OQSO, there are 2^20 possible words, and the  ::

:: mean number of missing words from a string of 2^21  (over-  ::

:: lapping)  10-letter  words (2^21+9 "keystrokes") is 141909.  ::

:: The standard deviation sigma=339 was determined as for OQSO  ::

:: by simulation.  (Sigma for OPSO, 290, is the true value (to  ::

:: three places), not determined by simulation.              ::

```
:::::::::::::::::::::::::::::::::::::::::::::::::::::::::::

:::::::::::::::::::::::::::::::::::::::::::::::::::::::::::
```

::      This is the COUNT-THE-1's TEST on a stream of bytes.      ::

:: Consider the file under test as a stream of bytes (four per  ::

:: 32 bit integer).  Each byte can contain from 0 to 8 1's,      ::

:: with probabilities 1,8,28,56,70,56,28,8,1 over 256.  Now let  ::

:: the stream of bytes provide a string of overlapping  5-letter ::

:: words, each "letter" taking values A,B,C,D,E. The letters are ::

:: determined by the number of 1's in a byte::  0,1,or 2 yield A,::

:: 3 yields B, 4 yields C, 5 yields D and 6,7 or 8 yield E. Thus ::

:: we have a monkey at a typewriter hitting five keys with vari- ::

:: ous probabilities (37,56,70,56,37 over 256).  There are 5^5  ::

:: possible 5-letter words, and from a string of 256,000 (over-  ::

:: lapping) 5-letter words, counts are made on the frequencies  ::

:: for each word.   The quadratic form in the weak inverse of   ::

:: the covariance matrix of the cell counts provides a chisquare ::

:: test::  Q5-Q4, the difference of the naive Pearson sums of   ::

:: (OBS-EXP)^2/EXP on counts for 5- and 4-letter cell counts.   ::

```
:::::::::::::::::::::::::::::::::::::::::::::::::::::::::::

:::::::::::::::::::::::::::::::::::::::::::::::::::::::::::
```

::      This is the COUNT-THE-1's TEST for specific bytes.      ::

:: Consider the file under test as a stream of 32-bit integers.  ::

:: From each integer, a specific byte is chosen , say the left-  ::

:: most::  bits 1 to 8. Each byte can contain from 0 to 8 1's,  ::

:: with probabilitie 1,8,28,56,70,56,28,8,1 over 256.  Now let  ::

:: the specified bytes from successive integers provide a string ::

:: of (overlapping) 5-letter words, each "letter" taking values  ::

:: A,B,C,D,E. The letters are determined  by the number of 1's, ::

:: in that byte::  0,1,or 2 ---> A, 3 ---> B, 4 ---> C, 5 ---> D,::

:: and  6,7 or 8 ---> E.  Thus we have a monkey at a typewriter  ::

:: hitting five keys with with various probabilities::  37,56,70,::

:: 56,37 over 256. There are 5^5 possible 5-letter words, and ::

:: from a string of 256,000 (overlapping) 5-letter words, counts ::

:: are made on the frequencies for each word. The quadratic form ::

:: in the weak inverse of the covariance matrix of the cell ::

:: counts provides a chisquare test:: Q5-Q4, the difference of ::

:: the naive Pearson sums of (OBS-EXP)^2/EXP on counts for 5- ::

:: and 4-letter cell counts. ::

:::::::::::::::::::::::::::::::::::::::::::::::::::::::::::::::

:::::::::::::::::::::::::::::::::::::::::::::::::::::::::::::::

:: THIS IS A PARKING LOT TEST ::

:: In a square of side 100, randomly "park" a car---a circle of ::

:: radius 1. Then try to park a 2nd, a 3rd, and so on, each ::

:: time parking "by ear". That is, if an attempt to park a car ::

:: causes a crash with one already parked, try again at a new ::

:: random location. (To avoid path problems, consider parking ::

:: helicopters rather than cars.) Each attempt leads to either ::

:: a crash or a success, the latter followed by an increment to ::

:: the list of cars already parked. If we plot n: the number of ::

:: attempts, versus k:: the number successfully parked, we get a::

:: curve that should be similar to those provided by a perfect ::

:: random number generator. Theory for the behavior of such a ::

:: random curve seems beyond reach, and as graphics displays are ::

:: not available for this battery of tests, a simple characteriz ::

:: ation of the random experiment is used: k, the number of cars ::

:: successfully parked after n=12,000 attempts. Simulation shows ::

:: that k should average 3523 with sigma 21.9 and is very close ::

:: to normally distributed. Thus (k-3523)/21.9 should be a st- ::

:: andard normal variable, which, converted to a uniform varia- ::

:: ble, provides input to a KSTEST based on a sample of 10. ::

:::::::::::::::::::::::::::::::::::::::::::::::::::::::::::::::

:::::::::::::::::::::::::::::::::::::::::::::::::::::::::::::::

::           THE MINIMUM DISTANCE TEST           ::

:: It does this 100 times::   choose n=8000 random points in a   ::

:: square of side 10000. Find d, the minimum distance between   ::

:: the (n^2-n)/2 pairs of points. If the points are truly inde- ::

:: pendent uniform, then d^2, the square of the minimum distance ::

:: should be (very close to) exponentially distributed with mean ::

:: .995 . Thus 1-exp(-d^2/.995) should be uniform on [0,1) and  ::

:: a KSTEST on the resulting 100 values serves as a test of uni- ::

:: formity for random points in the square. Test numbers=0 mod 5 ::

:: are printed but the KSTEST is based on the full set of 100   ::

:: random choices of 8000 points in the 10000x10000 square.     ::

:::::::::::::::::::::::::::::::::::::::::::::::::::::::::::::::::::::::::::

:::::::::::::::::::::::::::::::::::::::::::::::::::::::::::::::::::::::::::

::           THE 3DSPHERES TEST           ::

:: Choose  4000 random points in a cube of edge 1000. At each   ::

:: point, center a sphere large enough to reach the next closest ::

:: point. Then the volume of the smallest such sphere is (very   ::

:: close to) exponentially distributed with mean 120pi/3. Thus   ::

:: the radius cubed is exponential with mean 30. (The mean is    ::

:: obtained by extensive simulation). The 3DSPHERES test gener- ::

:: ates 4000 such spheres 20 times. Each min radius cubed leads ::

:: to a uniform variable by means of 1-exp(-r^3/30.), then a     ::

:: KSTEST is done on the 20 p-values.              ::

:::::::::::::::::::::::::::::::::::::::::::::::::::::::::::::::::::::::::::

:::::::::::::::::::::::::::::::::::::::::::::::::::::::::::::::::::::::::::

::     This is the SQEEZE test             ::

:: Random integers are floated to get uniforms on [0,1). Start- ::

:: ing with k=2^31=2147483647, the test finds j, the number of  ::

:: iterations necessary to reduce k to 1, using the reduction   ::

:: k=ceiling(k*U), with U provided by floating integers from    ::

:: the file being tested. Such j's are found 100,000 times,    ::

:: then counts for the number of times j was <=6,7,...,47,>=48 ::

:: are used to provide a chi-square test for cell frequencies. ::

:::::::::::::::::::::::::::::::::::::::::::::::::::::::::::::::::

:::::::::::::::::::::::::::::::::::::::::::::::::::::::::::::::::

::        The  OVERLAPPING SUMS test        ::

:: Integers are floated to get a sequence U(1),U(2),... of uni- ::

:: form [0,1) variables.  Then overlapping sums,        ::

::    S(1)=U(1)+...+U(100), S2=U(2)+...+U(101),... are formed.    ::

:: The S's are virtually normal with a certain covariance mat-    ::

:: rix.  A linear transformation of the S's converts them to a    ::

:: sequence of independent standard normals, which are converted ::

:: to uniform variables for a KSTEST. The  p-values from ten      ::

:: KSTESTs are given still another KSTEST.        ::

:::::::::::::::::::::::::::::::::::::::::::::::::::::::::::::::::

:::::::::::::::::::::::::::::::::::::::::::::::::::::::::::::::::

::     This is the RUNS test.  It counts runs up, and runs down, ::

:: in a sequence of uniform [0,1) variables, obtained by float- ::

:: ing the 32-bit integers in the specified file. This example    ::

:: shows how runs are counted:  .123,.357,.789,.425,.224,.416,.95::

:: contains an up-run of length 3, a down-run of length 2 and an ::

:: up-run of (at least) 2, depending on the next values.  The    ::

:: covariance matrices for the runs-up and runs-down are well    ::

:: known, leading to chisquare tests for quadratic forms in the ::

:: weak inverses of the covariance matrices.  Runs are counted    ::

:: for sequences of length 10,000.  This is done ten times. Then ::

:: repeated.        ::

:::::::::::::::::::::::::::::::::::::::::::::::::::::::::::::::::

:::::::::::::::::::::::::::::::::::::::::::::::::::::::::::::::::

:: This is the CRAPS TEST. It plays 200,000 games of craps, finds::

:: the number of wins and the number of throws necessary to end    ::

:: each game.  The number of wins should be (very close to) a    ::

:: normal with mean 200000p and variance 200000p(1-p), with    ::

:: p=244/495.  Throws necessary to complete the game can vary    ::

:: from 1 to infinity, but counts for all>21 are lumped with 21. ::

:: A chi-square test is made on the no.-of-throws cell counts.  ::

:: Each 32-bit integer from the test file provides the value for ::

:: the throw of a die, by floating to [0,1), multiplying by 6    ::

:: and taking 1 plus the integer part of the result.            ::

::::::::::::::::::::::::::::::::::::::::::::::::::::::::::::::::::::::

NOTE: Most of the tests in DIEHARD return a p-value, which should be uniform on [0,1) if the input file contains truly independent random bits.   Those p-values are obtained by p=F(X), where F is the assumed distribution of the sample random variable X---often normal. But that assumed F is just an asymptotic approximation, for which the fit will be worst in the tails. Thus you should not be surprised with occasional p-values near 0 or 1, such as .0012 or .9983. When a bit stream really FAILS BIG, you will get p's of 0 or 1 to six or more places.  By all means, do not, as a Statistician might, think that a p < .025 or p> .975 means that the RNG has "failed the test at the .05 level".  Such p's happen among the hundreds that DIEHARD produces, even with good RNG's.  So keep in mind that " p happens".

## Revendications

1. Générateur de nombres aléatoires (1) à haut débit comportant un générateur physique de nombres aléatoires (5) et dont l'entrée de données correspond à l'entrée de données du générateur physique (5), et générateur pseudo-aléatoire (6) couplé en sortie du générateur physique (5) recevant en son entrée un germe délivré par le générateur physique, ledit générateur physique (5) comportant un circuit logique (10) comportant au moins une entrée de données D et une entrée d'horloge (CLK), l'entrée de données (D) recevant un signal d'horloge "haute fréquence" H1 et l'entrée d'horloge (CLK) recevant un second signal d'horloge H2 "basse fréquence", le signal H1 "haute fréquence" étant échantillonné par le signal H2 "basse fréquence", les deux signaux d'horloge H1 et H2 de fréquences différentes provenant respectivement de deux oscillateurs différents (OSC1 et OSC2) travaillant en asynchronisme l'un de l'autre et ne respectant pas le temps d'établissement du circuit logique (10), la sortie du circuit (10) délivrant un signal dans un état intermédiaire qualifié de métastable entre "0" et "1" et étant constitué d'une suite de nombres aléatoires, la métastabilité du signal obtenu en sortie du circuit (1.0) étant accentuée par le bruit de phase de l'oscillateur (OSC1) générant le signal "haute fréquence" H1, ledit générateur de nombres aléatoires (1) étant **caractérisé en ce que** le générateur pseudo-aléatoire (6) ré-injecte une partie de son signal de sortie pseudo-aléatoire dans le générateur physique (5) pour être logiquement combiné avec le signal de sortie dudit circuit logique (10) pour pallier à une éventuelle défaillance du générateur physique (5), et **en ce qu'**il comporte une mémoire interne (9) stockant les nombres aléatoires obtenus en sortie du générateur pseudo-aléatoire (6) ; les deux générateurs (5) et (6) fonctionnant à partir d'un même et deuxième signal d'horloge H "haute fréquence" généré par un oscillateur externe (7).

**2.** Générateur de nombres aléatoires selon la revendication 1, **caractérisé en ce que** le générateur physique (5) comporte un bloc (11 ) qui, partant du signal d'horloge H "haute fréquence" généré par l'oscillateur externe (7), génère le signal H2 "basse fréquence" qui échantillonne le signal d'entrée du générateur physique (5).

**3.** Générateur de nombres aléatoires selon la revendication 2, **caractérisé en ce qu'**une partie du signal de sortie du générateur pseudo-aléatoire est ré-injecté dans le bloc (11 ) générant le signal "basse fréquence" pour forcer la variabilité de la période du signal "basse fréquence".

**4.** Générateur de nombres aléatoires selon la revendication 3, **caractérisé en ce que** le générateur physique (5) comporte un registre à décalage (13) recevant sur son entrée d'horloge (CLK) le signal H2 "basse fréquence" généré par le bloc (11 ) et recevant sur son entrée de données le signal de sortie du circuit logique (10) du type bascule ; le registre à décalage (13) délivrant sur sa sortie le germe alimentant le générateur pseudo-aléatoire (6).

**5.** Générateur de nombres aléatoires selon la revendication 4, **caractérisé en ce que** le générateur physique (5) comporte en outre une porte logique "ou exclusif" (12), couplée entre le circuit logique (10) du type bascule et le registre à décalage (13), et recevant sur une première entrée le signal de sortie du circuit logique (10) et sur une deuxième entrée, un bit du signal de sortie du générateur pseudo-aléatoire (6) pour pallier à une éventuelle défaillance du générateur physique (5).

**6.** Générateur de nombres aléatoires selon la revendication 5, **caractérisé en ce que** le générateur physique (5) comporte un compteur (14) recevant sur son entrée le signal d'horloge H2 "basse fréquence" et dont le signal de sortie commande la cadence du renouvellement du germe dans le générateur pseudo-aléatoire (6).

**7.** Générateur de nombres aléatoires selon l'une quelconque des revendications 1 à 6, **caractérisé en ce qu'**il comporte en outre, un module de test (15) couplé en entrée du générateur physique (5) qui reçoit en entrée les signaux "haute fréquence" H et H1 et délivre en sortie un signal d'erreur en cas de dysfonctionnement de l'oscillateur délivrant le signal H1 "haute fréquence" qui invalide la sortie du générateur physique (5) en forçant l'écriture de zéros dans la mémoire interne (9).

**8.** Générateur de nombres aléatoires selon l'une quelconque des revendications précédentes, **caractérisé en ce que** le générateur pseudo-aléatoire (6) implémente un algorithme du type multiplication avec retenue.

**9.** Générateur de nombres aléatoires selon l'une quelconque des revendications 2 à 8, **caractérisé en ce qu'**il est entièrement réalisé à partir d'un composant FPGA.

**10.** Mécanisme de génération de nombres aléatoires à la demande, **caractérisé en ce qu'**il comporte un générateur de nombres aléatoires (1) selon l'une quelconque des revendications 1 à 9, une mémoire double-port (3) comportant un buffer de réception ($3_1$), couplée en sortie du générateur (1) sur le bus du générateur (1 ), et **en ce qu'**il comporte un microprocesseur (2), couplé à la mémoire double-port (3) par le bus microprocesseur, communiquant avec le générateur (1) à travers la mémoire double-port (3) et postant dans la mémoire double-port (3) un mot de commande comprenant une adresse et un compte contenant un nombre maximal de mots aléatoires à stocker, et **en ce que** le buffer ($3_1$) de la mémoire double-port (3), à la demande du microprocesseur (2), est alimentée par la mémoire interne (9) du générateur (1) jusqu'à épuisement d'un compte correspondant à un nombre maximal déterminé de nombres aléatoires, puis exploité par le microprocesseur (2).

**11.** Carte accélératrice des fonctions cryptographiques d'une machine informatique, **caractérisée en ce qu'**elle supporte un générateur aléatoire selon l'une quelconque des revendications 1 à 9.

**12.** Carte accélératrice des fonctions cryptographiques d'une machine informatique, **caractérisée en ce qu'**elle supporte un mécanisme selon la revendication 10.

**Patentansprüche**

1. Zufallszahlgenerator (1) mit hohem Durchsatz, der einen physikalischen Zufallszahlengenerator (5) umfaßt und dessen Dateneingang dem Dateneingang des physikalischen Generators (5) entspricht, und einen Pseudozufallsgenerator (6) umfaßt, der mit dem Ausgang des physikalischen Generators (5) gekoppelt ist und an seinem Eingang einen von dem physikalischen Generator gelieferten Keim empfängt, wobei der physikalische Generator (5) eine Logikschaltung (10) umfaßt, die wenigstens einen Dateneingang D und einen Takteingang (CLK) aufweist, wobei der Dateneingang (D) ein "Hochfrequenz"-Taktsignal empfängt und der Takteingang (CLK) ein zweites "Niederfrequenz"-Taktsignal H2 empfängt, wobei das "Hochfrequenz"-Signal H1 durch das "Niederfrequenz"-Signal H2 abgetastet wird, wobei die zwei Taktsignale H1 und H2 mit verschiedenen Frequenzen von zwei entsprechenden, verschiedenen Oszillatoren (OSC1 und OSC2) stammen, die asynchron zueinander arbeiten und die Einschwingzeit der Logikschaltung (10) nicht berücksichtigen, wobei der Ausgang der Schaltung (10) ein Signal in einem Zwischenzustand liefert, der als metastabil zwischen "0" und "1" qualifiziert ist und aus einer Folge von Zufallszahlen gebildet ist, wobei die Metastabilität des am Ausgang der Schaltung (10) erhaltenen Signals durch das Phasenrauschen des Oszillators (OSC1), der das "Hochfrequenz"-Signal H1 erzeugt, verstärkt wird, wobei der Zufallszahlgenerator (1) **dadurch gekennzeichnet ist, daß** der Pseudozufallsgenerator (6) einen Teil seines Pseudozufallsausgangssignals wieder in den physikalischen Generator (5) einleitet, damit er mit dem Ausgangssignal der Logikschaltung (10) logisch kombiniert wird, um eine eventuelle Störung des physikalischen Generators (5) zu beheben, und daß er einen internen Speicher (9) umfaßt, der die am Ausgang des Pseudozufallsgenerators (6) erhaltenen Zufallszahlen speichert; wobei die zwei Generatoren (5) und (6) anhand eines zweiten, jeweils gleichen "Hochfrequenz"-Taktsignals H, das von einem externen Oszillator (7) erzeugt wird, arbeiten.

2. Zufallszahlgenerator nach Anspruch 1, **dadurch gekennzeichnet, daß** der physikalische Generator (5) einen Block (11) umfaßt, der anhand des "Hochfrequenz"-Taktsignals H, das von dem externen Oszillator (7) erzeugt wird, das "Niederfrequenz"-Signal H2 erzeugt, das das Eingangssignal des physikalischen Generators (5) abtastet.

3. Zufallszahlgenerator nach Anspruch 2, **dadurch gekennzeichnet, daß** ein Teil des Ausgangssignals des Pseudozufallsgenerators wieder in den das "Niederfrequenz"-Signal erzeugenden Block (11) eingeleitet wird, um die Schwankung der Periode des "Niederfrequenz"-Signals zu erzwingen.

4. Zufallszahlgenerator nach Anspruch 3, **dadurch gekennzeichnet, daß** der physikalische Generator (5) ein Schieberegister (13) umfaßt, das an seinem Takteingang (CLK) das von dem Block (11) erzeugte "Niederfrequenz"-Signal H2 empfängt und an seinem Dateneingang das Ausgangssignal der Logikschaltung (10) des Kippschaltungstyps empfängt; wobei das Schieberegister (13) an seinem Ausgang den Keim ausgibt, mit dem der Pseudozufallsgenerator (6) versorgt wird.

5. Zufallszahlgenerator nach Anspruch 4, **dadurch gekennzeichnet, daß** der physikalische Generator (5) außerdem ein "Exklusiv-ODER"-Logikgatter (12) umfaßt, das zwischen die Logikschaltung (10) des Kippschaltungstyps und das Schieberegister (13) geschaltet ist und an einem ersten Eingang das Ausgangssignal der Logikschaltung (10) und an einem zweiten Eingang ein Bit des Ausgangssignals des Pseudozufallsgenerators (6) empfängt, um eine eventuelle Störung des physikalischen Generators (5) zu beheben.

6. Zufallszahlgenerator nach Anspruch 5, **dadurch gekennzeichnet, daß** der physikalische Generator (5) einen Zähler (14) umfaßt, der an seinem Eingang das "Niederfrequenz"-Taktsignal H2 empfängt und dessen Ausgangssignal den Auffrischungstakt des Keims in dem Pseudozufallsgenerator (6) steuert.

7. Zufallszahlgenerator nach einem der Ansprüche 1 bis 6, **dadurch gekennzeichnet, daß** er außerdem ein Testmodul (15) umfaßt, das mit dem Eingang des physikalischen Generators (5) gekoppelt ist und das an seinem Eingang die "Hochfrequenz"-Signale H und H1 empfängt und an seinem Ausgang ein Fehlersignal bei einer Fehlfunktion des das "Hochfrequenz"-Signal H1 liefernden Oszillators ausgibt, das den Ausgang des physikalischen Generators (5) ungültig macht, indem es das Schreiben von Nullen in den internen Speicher (9) erzwingt.

8. Zufallszahlgenerator nach einem der vorhergehenden Ansprüche, **dadurch gekennzeichnet, daß** der Zufallszahlgenerator (6) einen Algorithmus des Typs Multiplikation mit Übertrag implementiert.

9. Zufallszahlgenerator nach einem der Ansprüche 2 bis 8, **dadurch gekennzeichnet, daß** er vollständig anhand einer FPGA-Komponente verwirklicht ist.

10. Mechanismus für die Erzeugung von Zufallszahlen auf Anforderung, **dadurch gekennzeichnet, daß** er einen Zufallszahlgenerator (1) nach einem der Ansprüche 1 bis 9 und einen Dualport-Speicher (3), der einen Empfangs-puffer ($3_1$) aufweist und am Ausgang des Generators (1) mit dem Bus des Generators (1) gekoppelt ist, und einen Mikroprozessor (2) umfaßt, der über den Mikroprozessor-Bus mit dem Dualport-Speicher (3) gekoppelt ist und mit dem Generator (1) über den Dualport-Speicher (3) kommuniziert und in dem Dualport-Speicher (3) ein Steuerwort ablegt, das eine Adresse und einen Zählstand enthält, der eine maximale Anzahl zu speichernder Zufallswörter enthält, und daß der Puffer ($3_1$) des Dualport-Speichers (3) auf Anforderung des Mikroprozessors (2) durch den internen Speicher (9) des Generators (1) versorgt wird, bis ein Zählstand ausgeschöpft ist, der einer bestimmten maximalen Anzahl von Zufallswörtern entspricht, und dann von dem Mikroprozessor (2) genutzt wird.

11. Karte für die Beschleunigung von Chiffrierungsfunktionen einer Datenverarbeitungsmaschine, **dadurch gekennzeichnet, daß** sie einen Zufallsgenerator nach einem der Ansprüche 1 bis 9 trägt.

12. Karte für die Beschleunigung von Chiffrierungsfunktionen einer Datenverarbeitungsmaschine, **dadurch gekennzeichnet, daß** sie einen Mechanismus nach Anspruch 10 trägt.

**Claims**

1. High-speed random number generator (1) comprising a physical random number generator (5) and the data input of which corresponds to the data input of the physical generator (5), and a pseudo-random generator (6) coupled at the output of the physical generator (5) receiving at its input a germ delivered by the physical generator, said physical generator (5) comprising a logic circuit (10) comprising at least one data input D and one clock input (CLK), the data input (D) receiving a "high-frequency" clock signal H1 and the clock input (CLK) receiving a second "low-frequency" clock signal H2, the "high-frequency" signal H1 being sampled by the "low-frequency" signal H2, the two clock signals H1 and H2 of different frequencies coming respectively from two different oscillators (OSC1 and OSC2) operating asynchronously from one another and not adhering to the time for establishing the logic circuit (10), the output from the circuit (10) supplying a signal in an intermediate state qualified as metastable between "0" and "1" and being constituted by a series of random numbers, the metastability of the signal obtained as an output from the circuit (1.0) being accentuated by the phase noise from the oscillator (OSC1) generating the "high-frequency" signal H1, said random number generator (1) being **characterised in that** the pseudo-random generator (6) re-injects part of its pseudo-random output signal into the physical generator (5) so as to be logically combined with the output signal from said logic circuit (10) in order to overcome any failure of the physical generator (5), and **in that** it comprises an internal memory (9) storing the random numbers obtained as an output from the pseudo-random generator (6); the two generators (5) and (6) operating on the basis of the same second "high-frequency" clock signal H generated by an external oscillator (7).

2. Random number generator according to Claim 1, **characterised in that** the physical generator (5) comprises a block (11 ) that, starting from the "high-frequency" clock signal H generated by the external oscillator (7), generates the "low-frequency" signal H2, which samples the input signal of the physical generator (5).

3. Random number generator according to Claim 2, **characterised in that** part of the output signal from the pseudo-random generator is re-injected into the block (11 ) generating the "low-frequency" signal in order to force the variability of the period of the "low-frequency" signal.

4. Random number generator according to Claim 3, **characterised in that** the physical generator (5) includes a shift register (13) receiving at its clock input (CLK) the "low-frequency" signal H2 generated by the block (11 ) and receiving at its data input the output signal from the flip-flop-type logic circuit (10); the shift register (13) delivering at its output the germ supplying the pseudo-random generator (6).

5. Random number generator according to Claim 4, **characterised in that** the physical generator (5) also comprises an "exclusive OR" logic gate (12), coupled between the flip-flop-type logic circuit (10) and the shift register (13), and receiving at a first input the output signal from the logic circuit (10) and, at a second input, a bit of the output signal from the pseudo-random generator (6), in order to overcome any failure of the physical generator (5).

6. Random number generator according to Claim 5, **characterised in that** the physical generator (5) includes a counter (14) receiving at its input the "low-frequency" clock signal H2 and the output signal of which controls the rate of renewal of the germ in the pseudo-random generator (6).

**7.** Random number generator according to any one of Claims 1 to 6, **characterised in that** it further comprises a test module (15) coupled at the input of the physical generator (5), which receives as an input the "high-frequency" signals H and H1 and supplies as an output an error signal in the case of a malfunction of the oscillator supplying the "high-frequency" signal H1, which invalidates the output of the physical generator (5) by forcing the writing of zeros into the internal memory (9).

**8.** Random number generator according to any one of the preceding claims, **characterised in that** the pseudo-random generator (6) implements an algorithm of the multiply-with-carry type.

**9.** Random number generator according to any one of Claims 2 to 8, **characterised in that** it is produced entirely from an FPGA component.

**10.** Mechanism for generating random numbers on request, **characterised in that** it comprises a random number generator (1) according to any one of Claims 1 to 9, a dual-port memory (3) comprising a receiving buffer ($3_1$), coupled at the output of the generator (1) over the bus of the generator (1), and **in that** it comprises a microprocessor (2), coupled to the dual-port memory (3) via the microprocessor bus, communicating with the generator (1) across the dual-port memory (3) and posting to the dual-port memory (3) a control word comprising an address and a count containing a maximum number of random words to be stored, and **in that** the buffer ($3_1$) of the dual-port memory (3), at the request of the microprocessor (2), is supplied by the internal memory (9) of the generator (1) until a count corresponding to a given maximum number of random numbers is exhausted, then utilised by the microprocessor (2).

**11.** Card for accelerating the cryptographic functions of an information-processing machine, **characterised in that** it supports a random generator according to any one of Claims 1 to 9.

**12.** Card for accelerating the cryptographic functions of an information-processing machine, **characterised in that** it supports a mechanism according to Claim 10.

FIG.1

FIG.2

OSC 1 — H₁ → 10 — D Q → Sortie métastable
OSC 2 — H₂ → CLK

FIG.3

FIG.4a

FIG.4b

FIG.4c — METASTABLE

PSEUDO RANDOM INPUT — 5

HORLOGE 25 MHZ (7) — H → DIVISEUR (11)
COMPTEUR (14) — LEN
HORLOGE 10 KHZ
CLK
GERME
H₂
CLK Q
HORLOGE 33 MHZ (8) — H₁ → D
10
12
D — 13
TEST (15)
ERROR
PSEUDO RANDOM INPUT

FIG.5